# EUROPEAN PATENT SPECIFICATION

(11) **EP 4 074 525 B1**
(45) Date of publication and mention of the grant of the patent: **04.12.2024**
(21) Application number: 20900095.9
(22) Date of filing: 16.06.2020
(51) Int. Cl.: B60C 19/12, B60C 5/00, B60C 19/00

(54) **PNEUMATIC TIRE**
LUFTREIFEN
PNEUMATIQUE

(30) Priority: 10.12.2019 JP 2019223173
(43) Date of publication of application: 19.10.2022
(73) Proprietor: BRIDGESTONE CORPORATION, Chuo-ku Tokyo 104-8340 (JP)
(72) Inventor: ISHIHARA Taiga, Tokyo 104-8340 (JP)
(74) Representative: Marks & Clerk LLP
(86) International application number: PCT/JP2020/023658
(87) International publication number: WO 2021/117271

(56) References cited:
- EP-A2- 0 189 303
- DE-A1- 102015 212 488
- JP-A- 2007 302 072
- JP-A- 2008 080 969
- JP-A- 2008 080 969
- JP-A- 2008 174 080
- JP-A- 2009 023 548
- JP-A- 2009 034 924
- JP-A- 2009 126 463
- JP-A- 2011 020 479
- JP-A- 2011 020 479

## Description

### TECHNICAL FIELD

The present invention relates to a pneumatic tire.

### BACKGROUND

To reduce the resonant vibration (cavity resonance) of air or gas generated in cavities of tires, it is known to dispose sound dampers made of sponge materials on inner surfaces of tires. Patent Literature (PTL) 1 describes this type of sound damper. The sound damper can convert the vibration energy of air or gas in a cavity of a tire into thermal energy, thereby restraining cavity resonance in the cavity of the tire. Patent Literature (PTL) 2 also describes the use of non-woven fabric as a sound damper.

JP2007302072 discloses a projection protruding from the tire inside surface and extending in meshing form is formed in the region between the position as twice to treble of the belt half width from the width direction center of a belt layer embedded in the tread part and the tire maximum width position, and that end part of this projection located on the tread center side is arranged between the position as twice to treble of the belt half width from the width direction center of the belt layer and the belt end position, while the end part of the projection on the bead side is arranged between the tire maximum width position and the position as 0.2 times as large as the tire section height from the tire maximum width position.

JP2008080969 discloses a pneumatic tire having sound absorbing members for reducing cavernous resonance provided on the tire inner peripheral face (or an inner liner). The plurality of sound absorbing members are arranged spaced apart a predetermined gap in the tire circumferential direction, and have the same sound absorption coefficient to reduce cavernous resonance in the diagonal position with respect to the tire circumferential direction on the basis of a tire rotating shaft.

### CITATION LIST

### Patent Literature

PTL 1: JP 2005-254924
PTL 2: JP 2016-210250

### SUMMARY

### (Technical Problem)

The sound damper described in either PTL 1 or PTL 2 is attached onto an inner surface of a tread portion. From the viewpoint of restraining cavity resonance in a cavity of a tire, it is preferable that the sound damper is attached not only onto the inner surface of the tread portion but also onto inner surfaces of sidewall portions. However, in a case in which the sound damper described in PTL 1 or PTL 2 is attached onto each of the inner surfaces of the sidewall portions, the sound damper cannot fully follow repeated bending deformation occurring in the sidewall portion, which results in damage and deterioration of the sound damper.

It would be helpful to provide a pneumatic tire including a sound damper having a shape that easily follows the bending deformation of a sidewall portion.

### (Solution to Problem)

According to a first aspect of the invention there is provided a pneumatic tire as specified in claim 1.

### (Advantageous Effect)

According to the invention, it is possible to provide the pneumatic tire including the sound damper having the shape that easily follows the bending deformation of the sidewall portion.

### BRIEF DESCRIPTION OF THE DRAWINGS

In the accompanying drawings:
FIG. 1 is a tire widthwise cross sectional view of a pneumatic tire as an embodiment of the present invention;
FIG. 2 is a tire circumferential cross sectional view of the pneumatic tire illustrated in FIG. 1;
FIG. 3 is an enlarged cross sectional view that illustrates a part of a tire circumferential cross section of the tire illustrated in FIG. 2 in an enlarged manner;
FIG. 4 is a schematic diagram illustrating an example of an attachment method of a sound damper illustrated in FIG. 1; and
FIG. 5 is an enlarged cross sectional view that illustrates a part of a tire circumferential cross section of a pneumatic tire including a sound damper, not according to the present invention, as a variation of the sound damper illustrated in FIG. 1.

### DETAILED DESCRIPTION

An embodiment of a pneumatic tire according to the present invention will be exemplarily described below with reference to the drawings. In the drawings, common members and components are indicated with the same reference numerals.

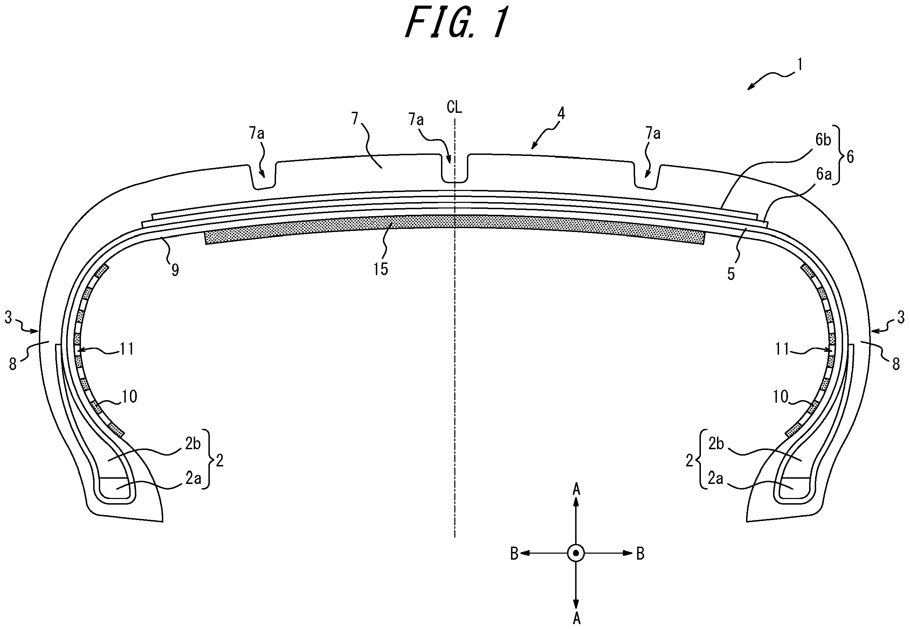

FIG. 1 is a drawing illustrating a pneumatic tire 1 (hereinafter referred to simply as "tire 1") as an embodiment of a pneumatic tire of the present invention. More specifically, FIG. 1 is a tire widthwise cross sectional view of the tire 1. The term "tire widthwise cross section" refers to a cross section in a plane that is parallel to a tire central axis and contains the tire central axis.

As illustrated in FIG. 1, the tire 1 of this embodiment includes a pair of bead portions 2, sidewall portions 3 connected to the bead portions 2, and a tread portion 4 connected to the sidewall portions 3. The tire 1 also includes a carcass 5 that straddles between a pair of bead cores 2a embedded in the pair of bead portions 2. The tire 1 includes a belt 6 disposed outside a crown portion of the carcass 5 in a tire radial direction A. The tire also includes tread rubber 7 disposed outside the belt 6 in the tire radial direction A, and side rubber 8 disposed outside side portions of the carcass 5 in a tire width direction B. Furthermore, the tire 1 includes an inner liner 9 that is laminated on an inner surface of the carcass 5.

As illustrated in FIG. 1, each of the bead portions 2 of the tire 1 of this embodiment includes, in addition to the bead core 2a described above, a bead filler 2b disposed outside the bead core 2a in the tire radial direction A. The bead filler 2b of this embodiment is in the outer shape of an approximately triangle in the tire widthwise cross sectional view, but the cross sectional shape is not particularly limited. Furthermore, the configuration of the bead portions 2 of the tire 1 is not limited to the configuration illustrated in FIG. 1. Therefore, the cross sectional shapes, sizes, and materials of the bead cores 2a and bead fillers 2b are also not particularly limited. Furthermore, the tire 1 may be configured without bead cores 2a and bead fillers 2b.

The carcass 5 of this embodiment is constituted of a single carcass ply made of organic fibers, but the configuration of the carcass 5 is not particularly limited. Therefore, the number and material of carcass plies constituting the carcass 5 are not particularly limited.

The belt 6 of this embodiment is constituted of two belt layers 6a and 6b, which are laminated in the tire radial direction A. Each of the belt layers 6a and 6b is made of a belt play in which belt cords, such as steel cords, are arranged inclinedly at an angle of 10° to 40° with respect to a tire circumferential direction C. The two belt plies are placed on top of each other with the directions of inclination of the belt cords different from each other. Therefore, the belt cords mutually cross each other between the belt plies, which increases belt rigidity and reinforces the almost entire width of the tread portion 4 by the hoop effect. However, the configuration of the belt 6 is not particularly limited. Therefore, the material of the belt cords in the belt 6, the number of hammerings, the inclination angle, the number of belt layers, and the like are not particularly limited.

The tread rubber 7 configures an outer surface (hereinafter referred to as "tread outer surface") of the tread portion 4 in the tire radial direction A. In the tread outer surface, a tread pattern including circumferential grooves 7a extending in the tire circumferential direction C, not-illustrated widthwise grooves extending in the tire width direction B, and the like, is formed. The side rubber 8 configures outer surfaces of the sidewall portions 3 in the tire width direction B, and is formed integrally with the above-described tread rubber 7. The materials of the tread rubber 7 and the side rubber 8 are not particularly limited.

The inner liner 9 is laminated on the inner surface of the carcass 5, and is made of, for example, butyl-type rubber, which has low air permeability. The term "butyl-type rubber" refers to butyl rubber and a derivative thereof, butyl halide rubber. However, the inner liner 9 may also be made of any known material, and the material thereof is not particularly limited.

As illustrated in FIG. 1, the tire 1 includes sound dampers 10 attached onto inner surfaces of the sidewall portions 3. As illustrated in FIG. 1, the sound damper 10 may be attached onto the inner surface of only one of the sidewall portions 3, but is preferably attached onto the inner surface of each of the sidewall portions 3 on both sides as in this embodiment. Thereby, cavity resonance can be further restrained.

The sound damper 10 is a porous material such as a sponge material, for example. The sound damper 10 of this embodiment has a flat outer shape in the tire widthwise cross sectional view illustrated in FIG. 1, but the shape thereof is not particularly limited. The dimensions and the like of the sound damper 10 are not particularly limited, but the volume of the sound damper 10 is preferably 0.1% to 80% of the total volume of a cavity of the tire 1. Setting the volume of the sound damper 10 to 0.1% or more of the total volume of the cavity of the tire 1 can improve a sound damping property. On the other hand, setting the volume of the sound damper 10 to 80% or less of the total volume of the cavity of the tire 1 can restrain a weight increase caused by the sound damper 10. The "volume" here refers to the volume of the tire 1 removed from a rim under normal temperature and normal pressure. The "total volume of the cavity of the tire" refer to a total volume when the tire 1 is mounted on an applicable rim and filled with specified internal pressure.

When the sound damper 10 is a sponge material, the sponge material may be a sponge-like porous structure and includes, for example, a so-called sponge with continuous bubbles made of foamed rubber or synthetic resin. In addition to the above-described sponge, the sponge material also includes a web-like material in which animal fibers, plant fibers, synthetic fibers, or the like are intertwined and connected together. The above-described "porous structure" is not limited to a structure with continuous bubbles, but also includes a structure with independent bubbles. In the sponge material as described above, pores formed in a surface or inside of the sponge material convert the vibrational energy of vibrating air into thermal energy. This restrains cavity resonance in the cavity of the tire, resulting in reduced road noise.

Examples of the sponge material include, for example, synthetic resin sponge such as ether-based polyurethane sponge, ester-based polyurethane sponge, and polyethylene sponge, and rubber sponge (EPDM sponge) such as chloroprene rubber sponge (CR sponge), ethylene propylene diene rubber sponge (EPDM sponge), and nitrile rubber sponge (NBR sponge). In terms of the sound damping property, light weight, adjustability in foaming, durability, and the like, it is preferable to use polyurethane sponge including ether-based polyurethane sponge, polyethylene sponge, or the like.

In a case in which the sound damper 10 is a sponge material, as in this embodiment, the hardness of the sponge material is not particularly limited, but is preferably in a range of 5 to 450 N. Setting the hardness to 5 N or higher can improve the sound damping property, while setting the hardness to 450 N or lower can increase adhesive strength of the sponge material. It is more preferable that the hardness of the sponge material is set in a range of 8 to 300 N. Thereby, the above-described effects can be further improved. Here, "hardness" refers to a value measured in conformity with Method A in Section 6.3 of the measurement methods in Section 6 of JIS K6400.

It is preferable that the specific gravity of the sponge material is between 0.001 and 0.090. Setting the specific gravity of the sponge material to 0.001 or more can improve the sound damping property, while setting the specific gravity of the sponge material to 0.090 or less can restrain a weight increase caused by the sponge material. It is more preferable that the specific gravity of the sponge material is between 0.003 and 0.080. Thereby, the above-described effects can be further improved. Here, "specific gravity" refers to a value that is measured in conformity with a method in Section 5 of JIS K6400, and is obtained by converting apparent density into specific gravity.

It is preferable that the tensile strength of the sponge material is between 20 and 500 kPa. Setting the tensile strength to 20 kPa or higher can improve the adhesive strength, while setting the tensile strength to 500 kPa or lower can improve the productivity of the sponge material. It is more preferable that the tensile strength of the sponge material is between 40 and 400 kPa. Thereby, the above-described effects can be further improved. Here, "tensile strength" refer to a value measured in conformity with a measurement method in Section 10 of JIS K6400 with a No. 1 dumbbell specimen.

It is preferable that the breaking elongation of the sponge material is 110% or more and 800% or less. Setting the breaking elongation to 110% or more can prevent the sponge material from cracking, while the breaking elongation to 800% or less can improve the productivity of the sponge material. It is more preferable that the breaking elongation of the sponge material is between 130% and 750% inclusive. Thereby, the above-described effects can be further improved. Here, "breaking elongation" refers to a value measured in conformity with a measurement method in Section 10 of JIS K6400 with a No. 1 dumbbell specimen.

It is preferable that the tear strength of the sponge material is between 1 and 130 N/cm. Setting the tear strength to 1 N/cm or higher can prevent the sponge material from cracking, while setting the tear strength to 130 N/cm or less improves the manufacturability of the sponge material. It is more preferable that the tear strength of the sponge material is between 3 and 115 N/cm. Thereby, the above-described effects can be further improved. Here, "tear strength" refers to a value measured in conformity with a measurement method in Section 11 of JIS K6400 with a No. 1 specimen.

It is preferable that the foaming ratio of the sponge material is 1% or more and 40% or less. Setting the foaming ratio to 1% or more can improve the sound damping property, while setting the foaming ratio to 40% or less can improve the productivity of the sponge material. It is more preferable that the foaming ratio of the sponge material is between 2 and 25%. Thereby, the above-described effects can be further improved. Here, the "foaming ratio" refers to a value in which 1 is subtracted from the ratio SG1/SG2 of the specific gravity SG1 of a solid phase of the sponge material to the specific gravity SG2 of the sponge material and then the result is multiplied by 100.

It is preferable that the entire mass of the sponge material is between 5 and 800 g. Setting the mass to 5 g or more can improve the sound damping property, while setting the mass to 800 g or less can restrain a weight increase caused by the sponge material. It is more preferable that the mass of the sponge material is between 20 and 600 g. Thereby, the above-described effects can be further improved.

The material that forms the sound damper 10 can be anything as long as the material can reduce the cavity resonance energy by mitigating or absorbing the cavity resonance energy, converting the cavity resonance energy into other energy (e.g., thermal energy), or the like, and is not limited to the porous material described above. For example, a non-woven fabric made of organic or inorganic fibers may also be used.

Examples of organic fibers used in the sound damper 10 include rayon, polyethylene terephthalate, polyethylene naphthalate, polybenzimidazole, polyphenylene sulfide, polyvinyl alcohol, aliphatic polyamide, aromatic polyamide (aramid), aromatic polyimide, and the like. Examples of inorganic fibers used in the sound damper 10 include carbon fibers, fluorine fibers, glass fibers, metal fibers, and the like. A mixture of two or more different types of fibers may also be used.

The length and diameter of the fibers that form the non-woven fabric used in the sound damper 10 can be set arbitrarily. Although not specifically limited, the diameter of the fibers may be, for example, 100 nm to 200 µm.

It is preferable that the basis weight of the non-woven fabric used in the sound damper 10 is between 10 g/m² and 300 g/m². Setting the basis weight to 10 g/m² or more can made the fibers more uniform, while setting the basis weight to 300 g/m² prevents an excessive weight increase due to the provision of the sound damper 10.

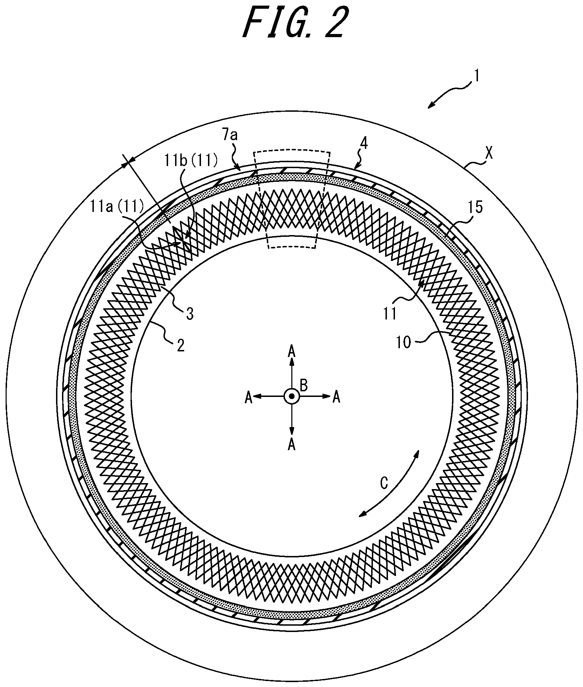

FIG. 2 is a tire circumferential cross sectional view of the tire 1. The term "tire circumferential cross section" refers to a cross sectional view of the tire 1 at a tire equatorial plane CL. Note that, FIG. 2 omits details of a cross section inside the tread portion 4 such as the belt 6. As illustrated in FIGS. 1 and 2, a plurality of through holes 11 penetrating in the tire width direction B are formed in the sound damper 10. The sound damper 10 can be deformed in the tire radial direction A by varying the lengths of the through holes 11 in the tire radial direction A so as to follow the deformation of the sidewall portion 3 in the tire radial direction A. The sound damper 10 with such through holes 11 can follow the bending deformation of the sidewall portion 3 more easily than tire radial direction a sound damper without through holes 11. Therefore, it is possible to realize the sound damper 10 that is difficult to be damaged by the repeated bending deformation occurring in the sidewall portion 3.

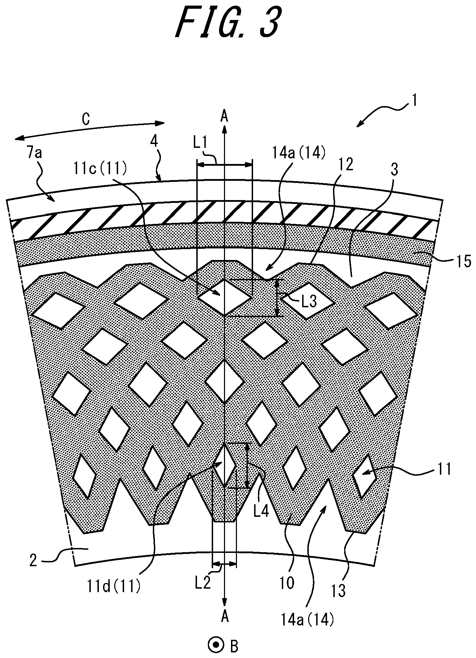

FIG. 3 is an enlarged cross sectional view that illustrates a part of the tire circumferential cross section of the tire 1 illustrated in FIG. 2 in an enlarged manner. FIG. 3 illustrates a region indicated by the dashed line in FIG. 2 in an enlarged manner, but the same is true in another region in the tire circumferential direction C.

As illustrated in FIGS. 2 and 3, the plurality of through holes 11 are formed at different positions in the tire circumferential direction C. The term "the through holes 11 are formed at different positions in the tire circumferential direction C" means that there are at least two through holes 11 that do not overlap in the tire radial direction A. This allows to restrain variations in the tire circumferential direction C in a following property, with which the sound damper 10 is deformed by following the deformation of the sidewall portion 3 in the tire radial direction A. In other words, it is more preferable that the plurality of through holes 11 are arranged at predetermined intervals in the sound damper 10 attached onto the inner surface of the sidewall portion 3 in the entire tire circumferential direction C.

As illustrated in FIGS. 2 and 3, it is preferable that the sound damper 10 is attached along the inner surface of the sidewall portion 3 in the entire tire circumferential direction C. This improves the sound damping property of the sound damper 10, as compared to a configuration in which the sound damper 10 is not attached in the entire tire circumferential direction C.

As illustrated in FIGS. 2 and 3, the through holes 11 are formed at different positions in the tire radial direction A. The term "the through holes 11 are formed at the different positions in the tire radial direction A" means that there are at least two through holes 11 that do not overlap in the tire circumferential direction C. This allows to restrain variations in the tire radial direction A in the following property, with which the sound damper 10 is deformed by following the deformation of the sidewall portion 3 in the tire radial direction A. In other words, it is preferable that the plurality of through holes 11 are arranged at predetermined intervals in the sound damper 10 attached onto the inner surface of the sidewall portion 3 in the entire tire radial direction A.

Furthermore, in the tire 1 of this embodiment, at least one through hole 11 is provided in the tire widthwise cross sectional view (refer to FIG. 1) at any position in a region (hereinafter referred to as "hole formation region X") in the tire circumferential direction C between two through holes 11a and 11b at both ends of the sound damper 10 in tire circumferential direction C. More specifically, as illustrated in FIG. 1, the tire widthwise cross sectional view of the tire 1 at any position in the hole formation region X includes at least one through hole 11. Due to this arrangement of the through holes 11, variations in the tire circumferential direction C in the following property, with which the sound damper 10 is deformed by following the deformation of the sidewall portion 3 in the tire radial direction A, can be further restrained. Such an arrangement of the through holes 11 does not have to be achieved by arranging the through holes 11 in a regular manner. However, it is preferable that the through holes 11 are arranged in a staggered manner as in this embodiment. Thereby, the above-described arrangement of the through holes 11 can be easily realized, as compared to a configuration in which the through holes are randomly arranged.

In addition, as illustrated in FIG. 3, of the through holes 11, the through holes 11 located outside in the tire radial direction A are longer in length in the tire circumferential direction C than the through holes 11 located inside in the tire radial direction A. In FIG. 3, by way of example, length in the tire circumferential direction C is compared between a through hole 11c located outermost in the tire radial direction A and a through hole 11d located innermost in the tire radial direction A, at the same position in the tire circumferential direction C. The maximum length L1 of the through hole 11c in the tire circumferential direction C is longer than the maximum length L2 of the through hole 11d in the tire circumferential direction C.

Furthermore, as illustrated in FIG. 3, of the through holes 11, the through holes 11 located outside in the tire radial direction A are shorter in length in the tire radial direction A than the through holes 11 located inside in the tire radial direction A. In FIG. 3, by way of example, length in the tire radial direction A is compared between the above-described two through holes 11c and 11d. The maximum length L3 of the through hole 11c in the tire radial direction A is shorter than the maximum length L4 of the through hole 11d in the tire radial direction A.

Thus, by setting L1>L2 and L3<L4 for the through holes 11c and 11d, the through hole 11c is more easily flattened in the tire radial direction A than the through hole 11d when the sidewall portion 3 is bent and deformed in the tire radial direction A. This means that, in the sound damper 10, deformability in the tire radial direction A at the outside in the tire radial direction A is made higher than deformability in the tire radial direction A at the inside in the tire radial direction A. As described above, while arranging the plurality of through holes 11 in the tire radial direction A allows to restrain large variations in deformation performance in the tire radial direction A depending on position in the tire radial direction A, adjusting the lengths of the through holes 11 in the tire radial direction A and the tire circumferential direction C allows to adjust the deformation performance in the tire radial direction A depending on position in the tire radial direction A. In particular, it is preferable to set L1>L2 and L3<L4, as in the sound damper 10 of this embodiment. Thereby, the deformability of the sound damper 10 in the tire radial direction A can be improved at a position of the sidewall portion 3 on the outside in the tire radial direction A, which is easily deformed during tire rolling. In contrast, the sound damper 10 is hard to deform in the tire radial direction A in the vicinity of the bead portion 2, which is secured to the rim so as not to be bent and deformed during tire rolling, that is, at a position of the sidewall portion 3 on the inside in the tire radial direction A. As a result, the sidewall portion 3 is reinforced by the sound damper 10, and the bending deformation in the tire radial direction A is restrained at the position of the sidewall portion 3 in the vicinity of the bead portion 2.

Note that, the two through holes 11c and 11d described above are examples, and two through holes 11 between which the same relationship as "L1>L2 and L3<L4" above is established are not limited to the through holes 11c and 11b. More specifically, in this embodiment, the same relationship as "L1>L2 and L3<L4" above is established between any two through holes 11 at different positions in the tire radial direction A.

Furthermore, the sound damper 10 of this embodiment is attached onto the inner surface of the sidewall portion 3 with an outer edge 12 at the outside in the tire radial direction A pulled in the tire circumferential direction C more than a natural state, and with an inner edge 13 at the inside in the tire radial direction A compressed in the tire circumferential direction C more than the natural state. The "natural state" refers to a state in which no external force other than gravity is applied in the atmosphere. In other words, in the sound damper 10 of this embodiment, an outer position in the tire radial direction A becomes "sparse", and an inner position in the tire radial direction A becomes "dense". Thereby, the deformability of the sound damper 10 in the tire radial direction A can be increased at the outer position of the sidewall portion 3 in the tire radial direction A, which is easily bent and deformed during tire rolling. On the other hand, in the vicinity of the bead portion 2, i.e., at the inner position of the sidewall portion 3 in the tire radial direction A, which is secured to the rim so as not to be bent and deformed during tire rolling, the sidewall portion 3 is reinforced by the sound damper 10, and the bending deformation in the tire radial direction A is restrained. As in this embodiment, it is preferable that the tire 1 satisfies both of the above-described "sparse-dense" relationship and the above-described length relationship of "L1>L2 and L3<L4". Thereby, the above effects can be further improved.

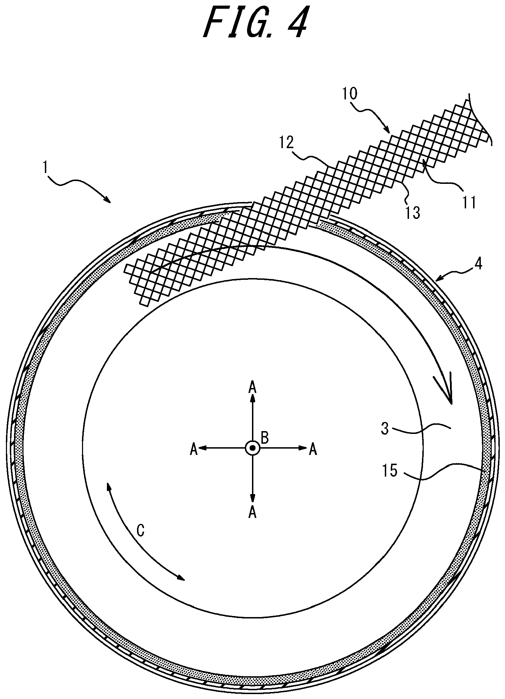

The above-described length relationship of "L1>L2 and L3<L4" and the above-described "sparse-dense" relationship can be realized, for example, by an attachment method of the sound damper 10 illustrated in FIG. 4. FIG. 4 is a schematic diagram illustrating an example of the attachment method of the sound damper 10 of this embodiment. As illustrated in FIG. 4, the sound damper 10 is configured into a linearly extending strip in a natural state before being attached onto the inner surface of the sidewall portion 3. As illustrated in FIG. 4, the strip configuring the sound damper 10 is attached onto the inner surface of the sidewall portion 3 along the tire circumferential direction C. More specifically, the strip configuring the sound damper 10 is attached onto the inner surface of the sidewall portion 3 using, for example, an adhesive material such as double-sided adhesive tape or glue, while curving both end faces in a strip width direction into an arc shape so as to follow the tire circumferential direction C (refer to the arrow in FIG. 4). In this way, the strip configuring the sound damper 10 can be attached onto the inner surface of the sidewall portion 3 with the outer edge 12 at the outside in the tire radial direction A pulled in the tire circumferential direction C more than the natural state, and with the inner edge 13 at the inside in the tire radial direction A compressed in the tire circumferential direction C more than the natural state. In other words, the "sparse-dense" relationship described above can be realized. In a case in which original holes, which are bases of the through holes 11, are formed in the same shape and with the same area regardless of position in the tire radial direction A, adopting the attachment method illustrated in FIG. 4 ensures that the outer edge 12 is pulled in the tire circumferential direction C and the inner edge 13 is compressed in the tire circumferential direction C. In other words, by attaching such a strip to the inner surface of the sidewall portion 3 using the attachment method illustrated in FIG. 4, the above-described length relationship of "L1>L2 and L3<L4" can be achieved.

The through holes 11 of the sound damper 10 of this embodiment each have an approximately diamond shape in the tire circumferential cross sectional view illustrated in FIGS. 2 and 3, but this shape is not particularly limited. For example, the through holes 11 of the sound damper 10 may each be in the shape of a polygon other than a diamond, a circle, an oval, or the like.

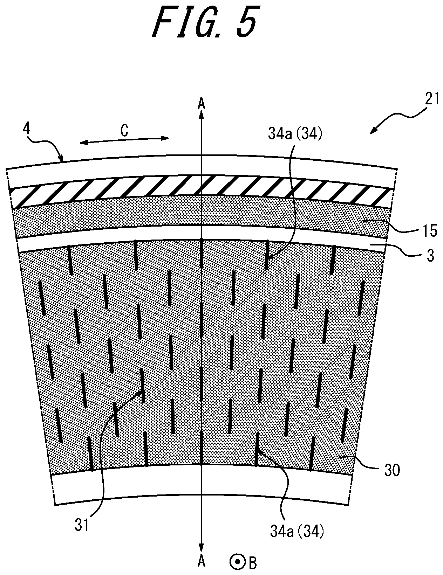

Furthermore, as illustrated in FIG. 3, in the outer edge 12 and the inner edge 13 of the sound damper 10 of this embodiment, a plurality of recesses 14 are formed at intervals in the tire circumferential direction C. The formation of such recesses 14 makes it easy to deform the sound damper 10 along the tire circumferential direction C on the inner surface of the sidewall portion 3. More specifically, the presence of the recesses 14 makes it easier for the outer edge 12 to be extensionally deformed in the tire circumferential direction C, and for the inner edge 13 to be compressively deformed in the tire circumferential direction C. Therefore, even when the attachment method as illustrated in FIG. 4 is adopted, for example, the sound damper 10 can be easily attached onto the inner surface of the sidewall portion 3 along the tire circumferential direction C. Note that, the recesses 14 are not limited to V-shaped notches 14a as illustrated in this embodiment. For example, the recesses 14 may be notches of another shape, such as U-shaped notches, or linear slits as illustrated in FIG. 5. The slits as the recesses 14 will be described later (refer to FIG. 5).

As illustrated in FIG. 1, in the tire 1, a sealant layer 15 is laminated on an inner surface of the tread portion 4. As described above, the plurality of through holes 11 are formed in the sound damper 10. Accordingly, the sound damper 10 is hard to damage even when the sound damper 10 is attached onto the inner surface of the sidewall portion 3, which improves durability. In other words, the sound damper 10 need not be attached on the inner surface of the tread portion 4. Therefore, the sealant layer 15 may be provided on the inner surface of the tread portion 4, as in the tire 1 of this embodiment. Thereby, the arrangement positions of the sound damper 10 and the sealant layer 15 can be different on an inner surface of the tire, so the sealant layer 15 is hard to adhere to the sound damper 10. This makes it difficult to deteriorate the adhesive performance of the sealant layer 15, thereby increasing the durability of sealing performance by the sealant layer 15. The sealant layer 15 is laminated only on the inner surface of the tread portion 4 in the tire width direction B. Note that, the sound damper 10 of this embodiment is attached only onto the inner surface of the sidewall portion 3, but is not limited to this configuration. The sound damper 10 may extend to the inner surface of the tread portion 4, in addition to the inner surface of the sidewall portion 3, as long as the sound damper 10 does not overlap the sealant layer 15 in the tire width direction B.

A sealant liquid, which is an adhesive fluid, can be used for the sealant layer 15. For example, a sealant agent conventionally known as a puncture sealant can be used. As the sealant agent, for example, a silicone compound, a styrene compound, a urethane compound, an ethylene compound, a gel sheet consisting mainly of polybutene and terpene resin, or the like can be used.

FIG. 5 is a drawing illustrating a tire 21 including a sound damper 30 as a variation of the sound damper illustrated in FIGS. 1 to 4 and not according to the present invention. Compared to the tire 1 described above, the tire 21 differs only in the configuration of the sound damper, while the other configurations are common. Thus, only the difference of the sound damper 30 from the above-described sound damper 10 (refer to FIG. 3 and the like) will be described here. FIG. 5 is an enlarged cross sectional view of the sound damper 30 illustrating the same position as the sound damper 10 in FIG. 3.

As illustrated in FIG. 5, the sound damper 30 differs from the above-described sound damper 10 (refer to FIG. 3 and the like) in the shapes of through holes and recesses. Through holes 31 of the sound damper 30 illustrated in FIG. 5 are constituted of slits extending in the tire radial direction A. The through holes 31 may be such slits.

The recesses 34 of the sound damper 30 illustrated in FIG. 5 are constituted of slits 34a extending in the tire radial direction A. The recesses 34 may be such slits 34a.

Forming both of the through holes 31 and the recesses 34 of the sound damper 30 into a slit shape makes it easier to follow the bending of the sidewall portion 3, as in the sound damper 10 illustrated in FIGS. 1 to 4, as compared to the configuration without the through holes 31 and recesses 34. Furthermore, it is easier for the sound damper 30 illustrated in FIG. 5 to secure volume than for the sound damper 10 illustrated in FIGS. 1 to 4. Therefore, the sound damping property can be further improved.

### INDUSTRIAL APPLICABILITY

The present invention relates to a pneumatic tire.

### REFERENCE SIGNS LIST

- 1, 21: Tire
- 2: Bead portion
- 2a: Bead core
- 2b: Bead filler
- 3: Sidewall portion
- 4: Tread portion
- 5: Carcass
- 6: Belt
- 6a, 6b: Belt layer
- 7: Tread rubber
- 7a: Circumferential groove
- 8: Side rubber
- 9: Inner liner
- 10, 30: Sound damper
- 11, 11a, 11b, 11c, 11d, 31: Through hole
- 12: Outer edge
- 13: Inner edge
- 14, 34: Recess
- 14a: Notch
- 15: Sealant layer
- 34a: Slit
- A: Tire radial direction
- B: Tire width direction
- C: Tire circumferential direction
- CL: Tire equatorial plane
- L1, L2: Maximum length of through hole in tire circumferential direction
- L3, L4: Maximum length of through hole in tire radial direction
- X: Hole formation region

## Claims

1. A pneumatic tire (1) comprising a sound damper (10) attached onto an inner surface of a sidewall portion (3), wherein
the sound damper is formed with a plurality of through holes (11) penetrating in a tire width direction (B), and
the sound damper is deformable in a tire radial direction (A) by varying lengths of the through holes in the tire radial direction by following deformation of the sidewall portion in the tire radial direction;
wherein the plurality of through holes are formed at different positions in a tire circumferential direction (C);
wherein the plurality of through holes are formed at different positions in the tire radial direction; and
wherein, of the through holes, one or more through holes (11c) located outside in the tire radial direction are longer in length (L1) in the tire circumferential direction than one or more through holes (11d) located inside in the tire radial direction, and, of the through holes, one or more through holes located outside in the tire radial direction are shorter in length (L3) in the tire radial direction than one or more through holes located inside in the tire radial direction.

2. The pneumatic tire (1) according to claim 1, wherein at least one of the through holes (11) is provided in a tire widthwise cross sectional view at any position in a tire circumferential region between two through holes at both ends of the sound damper (10) in the tire circumferential direction.

3. The pneumatic tire (1) according to claim 2, wherein the through holes (11) are arranged in a staggered manner.

4. The pneumatic tire (1) according to any preceding claim, wherein the sound damper (10) is attached onto the inner surface of the sidewall portion (3) with an outer edge (12) at outside in the tire radial direction (A) pulled in the tire circumferential direction (C) more than a natural state, and with an inner edge (13) at inside in the tire radial direction compressed in the tire circumferential direction more than the natural state.

5. The pneumatic tire (1) according to claim 4, wherein in the outer edge (12) and the inner edge (13) of the sound damper (10), a plurality of recesses (14) are formed at intervals in the tire circumferential direction (C).

6. The pneumatic tire (1) according to any preceding claim, wherein a sealant layer (15) is laminated on an inner surface of a tread portion (4).

## Patentansprüche

1. Luftreifen (1), der einen Schalldämpfer (10) umfasst, der an einer Innenfläche eines Seitenwandabschnitts (3) befestigt ist, wobei
der Schalldämpfer mit einer Vielzahl von Durchgangslöchern (11) geformt ist, die in einer Reifenbreitenrichtung (B) hindurchdringen, und
der Schalldämpfer in einer Reifenradialrichtung (A) verformbar ist durch Verändern von Längen der Durchgangslöcher in der Reifenradialrichtung durch Folgen einer Verformung des Seitenwandabschnitts in der Reifenradialrichtung;
wobei die Vielzahl von Durchgangslöchern an unterschiedlichen Positionen in einer Reifenumfangsrichtung (C) geformt sind;
wobei die Vielzahl von Durchgangslöchern an unterschiedlichen Positionen in der Reifenradialrichtung geformt sind; und
wobei, von den Durchgangslöchern, ein oder mehrere Durchgangslöcher (11c), die sich in der Reifenradialrichtung außen befinden, in einer Länge (L1) in der Reifenumfangsrichtung länger sind als ein oder mehrere Durchgangslöcher (11d), die sich in der Reifenradialrichtung innen befinden, und, von den Durchgangslöchern, ein oder mehrere Durchgangslöcher, die sich in der Reifenradialrichtung außen befinden, in einer Länge (L3) in der Reifenradialrichtung kürzer sind als ein oder mehrere Durchgangslöcher, die sich in der Reifenradialrichtung innen befinden.

2. Luftreifen (1) nach Anspruch 1, wobei mindestens eines der Durchgangslöcher (11) in einer Querschnittsansicht der Reifenbreite nach an einer beliebigen Position in einem Reifenumfangsbereich zwischen zwei Durchgangslöchern an beiden Enden des Schalldämpfers (10) in der Reifenumfangsrichtung bereitgestellt ist.

3. Luftreifen (1) nach Anspruch 2, wobei die Durchgangslöcher (11) auf eine gestaffelte Weise angeordnet sind.

4. Luftreifen (1) nach einem der vorhergehenden Ansprüche, wobei der Schalldämpfer (10) an der Innenfläche des Seitenwandabschnitts (3) befestigt ist, wobei eine äußere Kante (12) auf einer Außenseite in der Reifenradialrichtung (A) mehr als in einem natürlichen Zustand in der Reifenumfangsrichtung (C) gezogen ist, und wobei eine innere Kante (13) auf einer Innenseite in der Reifenradialrichtung mehr als im natürlichen Zustand in der Reifenumfangsrichtung zusammengedrückt ist.

5. Luftreifen (1) nach Anspruch 4, wobei in der äußeren Kante (12) und der inneren Kante (13) des Schalldämpfers (10) eine Vielzahl von Aussparungen (14) in Abständen in der Reifenumfangsrichtung (C) geformt sind.

6. Luftreifen (1) nach einem der vorhergehenden Ansprüche, wobei eine Dichtmittellage (15) auf eine Innenfläche eines Laufflächenabschnitts (4) geschichtet ist.

## Revendications

1. Bandage pneumatique (1), comprenant un amortisseur de bruit (10) fixé sur une surface interne d'une partie de flanc (3), dans lequel
l'amortisseur de bruit est formé avec une pluralité de trous traversants (11) pénétrant dans une direction de la largeur du pneumatique (B), et
l'amortisseur de bruit est déformable dans une direction radiale du pneumatique (A) en variant des longueurs des trous traversants dans la direction radiale du pneumatique en suivant une déformation de la partie de flanc dans la direction radiale du pneumatique ;
dans lequel la pluralité de trous traversants sont formés au niveau de positions différentes dans une direction circonférentielle du pneumatique (C) ;
dans lequel la pluralité de trous traversants sont formés au niveau de positions différentes dans une direction radiale du pneumatique ; et
dans lequel, parmi les trous traversants, un ou plusieurs trous traversants (1 1c) situés à l'extérieur, dans la direction radiale du pneumatique, ont une longueur (L1) supérieure, dans la direction circonférentielle du pneumatique, à celle d'un ou de plusieurs trous traversants (11d) situés à l'intérieur, dans la direction radiale du pneumatique, et, parmi les trous traversants, un ou plusieurs trous traversants situés à l'extérieur, dans la direction radiale, ont une longueur(L3) inférieure dans la direction radiale du pneumatique, à celle d'un ou de plusieurs trous traversants situés à l'intérieur dans la direction radiale du pneumatique.

2. Bandage pneumatique (1) selon la revendication 1, dans lequel au moins un des trous traversants (11) est fourni, dans une vue en section transversale en largeur du pneumatique, au niveau d'une quelconque position dans une région circonférentielle du pneumatique, entre deux trous traversants au niveau des deux extrémités de l'amortisseur de bruit (10), dans la direction circonférentielle du pneumatique.

3. Bandage pneumatique (1) selon la revendication 2, dans lequel les trous traversants (11) sont agencés de manière décalée les uns par rapport aux autres.

4. Bandage pneumatique (1) selon l'une quelconque des revendications précédente, dans lequel l'amortisseur de bruit (10) est fixé sur la surface interne de la partie de flanc (3), un bord externe (12) à l'extérieur, dans la direction radiale du pneumatique (A) étant tiré dans la direction circonférentielle du pneumatique (C) davantage qu'à un état naturel, et un bord interne (13) à l'intérieur dans la direction radiale du pneumatique étant comprimé dans la direction circonférentielle du pneumatique davantage qu'à l'état naturel.

5. Bandage pneumatique (1) selon la revendication 4, dans lequel, dans le bord externe (12) et le bord interne (13) de l'amortisseur de bruit (10), une pluralité d'évidements (14) sont formés à des intervalles dans la direction circonférentielle du pneumatique (C).

6. Bandage pneumatique (1) selon l'une quelconque des revendications précédentes, dans lequel une couche d'étanchéité (15) est stratifiée sur une surface interne d'une partie de bande de roulement (4).
